# EUROPÄISCHE PATENTSCHRIFT

(11) **EP 4 130 515 B1**
(45) Veröffentlichungstag und Bekanntmachung des Hinweises auf die Patenterteilung: **22.11.2023**
(21) Anmeldenummer: 22178218.8
(22) Anmeldetag: 09.06.2022
(51) Int. Cl.: F16H 25/24

(54) **ANTRIEBSVORRICHTUNG FÜR EINE VERSTELLBARE FAHRZEUGKLAPPE**
DRIVING DEVICE FOR AN ADJUSTABLE VEHICLE DOOR
DISPOSITIF D'ENTRAÎNEMENT POUR UN VOLET RÉGLABLE DE VÉHICULE

(30) Priorität: 03.08.2021 DE 102021120210
(43) Veröffentlichungstag der Anmeldung: 08.02.2023
(73) Patentinhaber: Edscha Engineering GmbH, 42855 Remscheid (DE)
(72) Erfinder: Dörnen, Jörg, 42855 Remscheid (DE); Mrowka, Peter, 42855 Remscheid (DE); Bartschies, Christian, 42855 Remscheid (DE)
(74) Vertreter: IPrime Bonnekamp Sparing Patentanwaltsgesellschaft mbH

(56) Entgegenhaltungen:
- CN-A- 107 842 275
- DE-A1-102017 101 325
- DE-B3-102020 105 716
- DE-U1-202011 106 110

## Beschreibung

Die Erfindung betrifft eine Antriebsvorrichtung, insbesondere für eine verstellbare Fahrzeugklappe, nach dem Oberbegriff des Anspruchs 1.

Aus der Praxis sind Antriebsvorrichtungen, insbesondere für angetrieben verstellbare Fahrzeugklappen bekannt, welche entlang einer Antriebsachse längs erstreckt sind und eine Antriebskraft in Richtung der Antriebsachse erzeugen, wobei bekannte Antriebsvorrichtung zum Antrieb einer angetrieben verstellbaren Fahrzeugklappe hierzu in der Regel zwischen einer Fahrzeugkarosserie und der zu verstellenden Fahrzeugklappe gelenkig angeschlossen ist und durch angetriebene Verstellung seiner Länge eine entsprechende Antriebskraft bereitstellen. Derartige Antriebsvorrichtungen sind meistens als Spindelantriebe ausgebildet, da diese aufgrund des vorhandenen Spindel-Spindelmuttergetriebes eine ausreichende Kraft in Richtung der Antriebsachse erzeugen können und dabei sehr zuverlässig und präzise sind.

Um eine möglichst genaue Verstellung zu gewährleisten, weisen bekannte Antriebsvorrichtungen oft eine Bremsvorrichtung auf, welche dazu dienen, ein Antriebselement, insbesondere eines von Spindelstange und Spindelmutter, nach Abschalten der diese antreibenden Antriebseinheit möglichst schnell in eine stillstehende Position zu bringen und damit die Verstellbewegung schnell zu stoppen. Darüber hinaus weisen bekannte Antriebsvorrichtungen auch Kopplungsvorrichtungen oder Drehmomentbegrenzungsvorrichtungen auf, welche der Betriebssicherheit dienen. Insbesondere sollen diese verhindern, dass die in einem Antriebsstrang der Antriebsvorrichtung vorhandenen Bauteile durch äußere Kräfte beschädigt werden oder dass die durch die Antriebsvorrichtung angetriebene Fahrzeugklappe größere Schäden für außenstehende Personen, insbesondere durch Einklemmen und dergleichen, verursacht. Durch Anordnung der zusätzlichen Vorrichtungen, insbesondere der Bremsvorrichtung in Kombination mit der Kopplungsvorrichtung, benötigt die Antriebsvorrichtung in der Regel einen gewissen minimalen Bauraum, insbesondere in Richtung der Antriebsachse, um die entsprechenden zusätzlichen Bremsvorrichtungen oder auch Kopplungs- und/oder Drehmomentbegrenzungsvorrichtungen aufzunehmen, sodass baubedingt immer eine gewisse Restbaulänge der Antriebsvorrichtung verbleibt, die entsprechend nicht unterschritten werden kann. Nachteilig können Antriebsvorrichtungen je nach vorhandener Geometrie der Fahrzeugklappe bzw. der Fahrzeugkarosserie gegebenenfalls nicht optimal angeschlossen werden, da die Restbaulänge gegebenenfalls zu groß für den optimalen Einbau ist.

DE 20 2011 106 110 U1 zeigt eine Antriebsvorrichtung für eine Fahrzeugklappe, umfassend ein Gehäuseteil, ein antrieb-seitiges Kopplungselement, welches zur Kopplung mit einem Antriebsmotor über ein Zwischengetriebe vorgesehen ist und ein abtrieb-seitiges Kopplungselement, welches zur Kopplung mit einer Spindelstange eines Spindel-SpindelmutterGetriebes vorgesehen ist. Die Antriebsvorrichtung umfasst weiter einen Motor zur Erzeugung einer Antriebskraft in Richtung einer Antriebsachse und ein als Spindelstange ausgebildetes erstes Antriebselement, wobei zwischen dem Motor und dem ersten Antriebselement eine Kopplungsvorrichtung angeordnet ist. Die Kopplungsvorrichtung umfasst ein Kopplungsgehäuse und ein erstes Kopplungsteil mit einem Kopplungsabschnitt zur Kopplung mit dem ersten Antriebselement. Weiter umfasst die Antriebsvorrichtung eine Bremsvorrichtung zur Bremsung einer angetriebenen Bewegung der Spindelstange. Die Bremsvorrichtung umfasst dabei ein mit dem Kopplungsteil drehfest verbundenes erstes Bremselement und ein gegenüber dem Kopplungsgehäuse drehfest angeordnetes zweites Bremselement, wobei das erste Bremselement einen zapfenförmigen Abschnitt umfasst und hohlzylinderförmig und das zweite Bremselement als Bremsscheibe ausgebildet ist. Das zweite Bremselement wird durch ein als Schraubendruckfeder ausgebildetes Vorspannmittel gegen das Kopplungsgehäuse vorgespannt. Nachteilig an der gezeigten Antriebsvorrichtung ist, dass die Bremsvorrichtung in der Kopplungsvorrichtung axial einen recht großen Bauraum in Anspruch nimmt und so die Restbaulänge der Antriebsvorrichtung gegebenenfalls zu groß für die Verwendung in bestimmten Fahrzeugkarosserien bzw. Fahrzeugklappen ist.

DE 10 2017 101 325 A1 zeigt eine Antriebsvorrichtung zur motorischen Verstellung einer Fahrzeugklappe, umfassend ein Kopplungsgehäuse und eine Kopplungsvorrichtung bzw. Bremsvorrichtung, wobei die Bremsvorrichtung in dem Kopplungsgehäuse aufgenommen ist. Die Bremsvorrichtung umfasst zwei Anschlusselemente, wobei eine der beiden Anschlusselemente mit einem Antriebsmotor und das andere der beiden Anschlusselemente mit einem als Spindelstange ausgebildeten Antriebselement gekoppelt ist. Zwischen den beiden Anschlusselementen sind Reibschlusselemente bzw. Bremselemente vorgesehen, welche eine reibschlüssige Kopplung der beiden Anschlusselement bewirken. Nachteilig an der gezeigten Antriebsvorrichtung ist, dass die Kopplungsvorrichtung bzw. die Bremsvorrichtung mehrere Anschlusselement erfordert und so in Richtung der Antriebsachse relativ viel Bauraum beansprucht und damit die Restbaulänge erhöht.

DE 10 2020 105 716 B3 zeigt eine Antriebsvorrichtung für eine verstellbare Fahrzeugklappe. Die Antriebsvorrichtung umfasst ein Gehäuse, welches sich axial entlang einer Antriebsachse erstreckt. Weiter umfasst die Antriebsvorrichtung eine zwischen einem Motor und einem als Spindelstange ausgebildeten ersten Antriebselement angeordnete Kopplungsvorrichtung, wobei Kopplungsvorrichtung zumindest ein als Adapterhülse ausgebildetes erstes Kopplungsteil mit einem als Innenverzahnung ausgebildeten Kopplungsabschnitt zur Kopplung mit dem ersten Antriebselement, wobei das erste Antriebselement über den Kopplungsabschnitt des ersten Kopplungsteils mit der Kopplungsvorrichtung gekoppelt ist. Weiter umfasst die Antriebsvorrichtung eine als Lamellenbremse ausgebildete Bremsvorrichtung zur Bremsung des ersten Antriebselementes. Die Bremsvorrichtung und der Kopplungsabschnitt bzw. die Kopplungsvorrichtung überlappen sich dabei teilweise. Nachteilig ergibt sich durch das Vorsehen sowohl einer Bremsvorrichtung als auch einer Kopplungsvorrichtung eine Erhöhung der axialen Ausdehnung bzw. der Restbaulänge der Antriebsvorrichtung.

CN 107 842 275 A zeigt eine Antriebseinheit, insbesondere für eine verstellbare Fahrzeugklappe, umfassend ein Gehäuse, wobei sich das Gehäuse axial entlang einer Antriebsachse erstreckt, einen Motor mit einer Ausgangswelle zur Erzeugung einer Antriebskraft in Richtung der Antriebsachse, ein als Spindelstange ausgebildetes Antriebselement, eine zwischen dem Motor und dem ersten Antriebselement angeordnete Kopplungsvorrichtung mit einem ersten Kopplungsteil zur Kopplung mit dem ersten Antriebselement, wobei das erste Antriebselement über einen ersten Kopplungsabschnitt des ersten Kopplungsteils mit der Kopplungsvorrichtung gekoppelt ist. Die Ausgangswelle des Motors ist über ein zweiten Kopplungsabschnitt des ersten Kopplungsteils mit der Kopplungsvorrichtung gekoppelt. Weiter umfasst die Antriebseinheit eine als Lamellenbremse ausgebildete Bremsvor-richtung zur Bremsung einer Antriebsbewegung des ersten Antriebselementes, wobei die Bremsvorrichtung zwischen dem ersten Kopplungsabschnitt und dem zweiten Kopplungsabschnitt des Kopplungsteils angeordnet ist.

Es ist die Aufgabe der vorliegenden Erfindung, eine Antriebsvorrichtung, insbesondere für eine verstellbare Fahrzeugklappe zu schaffen, welche eine geringere Restbaulänge aufweist und somit flexibler in verschiedenen Bauraumsituationen einsetzbar ist.

Nach einem Aspekt der Erfindung ist eine Antriebsvorrichtung, insbesondere für eine verstellbare Fahrzeugklappe geschaffen, umfassend ein Gehäuse, wobei sich das Gehäuse axial entlang einer Antriebsachse erstreckt. Weiter umfasst die Antriebsvorrichtung einen Motor zur Erzeugung einer Antriebskraft in Richtung der Antriebsachse, ein erstes Antriebselement und eine zwischen dem Motor und dem ersten Antriebselement angeordnete Kopplungsvorrichtung, wobei die Kopplungsvorrichtung ein Kopplungsgehäuse und zumindest ein erstes Kopplungsteil mit einem Kopplungsabschnitt zur Kopplung mit dem ersten Antriebselement umfasst. Das erste Antriebselement ist dabei über den Kopplungsabschnitt des ersten Kopplungsteils mit der Kopplungsvorrichtung gekoppelt. Weiter umfasst die Antriebsvorrichtung eine Bremsvorrichtung zur Bremsung einer Antriebsbewegung des ersten Antriebselementes. Die Antriebsvorrichtung zeichnet sich dadurch aus, dass die Bremsvorrichtung axial vollständig in dem Kopplungsabschnitt des ersten Kopplungsteils angeordnet ist. Vorteilhaft wird die Restbaulänge der Antriebsvorrichtung nicht durch die zusätzlich vorhandene Bremsvorrichtung vergrößert, sodass neben einer durch die Kopplungsvorrichtung bereitgestellten Drehmomentbegrenzungsfunktion oder auch Getriebefunktion zusätzlich eine Bremsfunktion ohne eine Vergrößerung der axialen Ausdehnung der Antriebsvorrichtung bereitgestellt werden kann.

In einer besonders bevorzugten Ausgestaltung ist vorgesehen, dass die Bremsvorrichtung den Kopplungsabschnitt radial umgibt. Vorteilhaft ist die radiale Ausdehnung der Bremsvorrichtung nicht zu klein, sodass ausreichende Bremsmomente erzielt werden und die in der Bremsvorrichtung vorhandenen Bauteile leicht ausgetauscht werden können.

Zweckmäßig umfasst die Bremsvorrichtung ein erstes Bremselement, wobei das erste Bremselement in dem Kopplungsgehäuse um die Antriebsachse drehbar gelagert ist. In einer vorteilhaften Weiterbildung umfasst die Bremsvorrichtung ein zweites Bremselement, wobei das zweite Bremselement in dem Kopplungsgehäuse drehfest angeordnet ist und kraftschlüssig mit dem ersten Bremselement zur Erzeugung einer Bremskraft gekoppelt ist. Vorteilhaft werden die für die Bremskraft erforderlichen Reibungskräfte durch die beiden Bremselemente bereitgestellt, sodass lediglich ein Austauschen der Bremselemente mit der Zeit erforderlich ist, während das Kopplungsgehäuse nicht wesentlich bei der Erzeugung der Bremskräfte einem Verschleiß unterworfen ist.

In einer vorteilhaften Weiterbildung ist vorgesehen, dass die Bremsvorrichtung ein Vorspannmittel umfasst, welche das erste Bremselement und das zweite Bremselement axial gegeneinander vorspannt. Besonders bevorzugt ist das Vorspannmittel als Tellerfeder ausgebildet. Vorteilhaft kann die durch die Bremsvorrichtung ausgeübte Bremskraft durch Einstellung der Vorspannung, welche durch das Vorspannmittel auf das erste Bremselement und das zweite Bremselement ausgeübt wird, besonders präzise eingestellt werden.

Bevorzugt ist das erste Bremselement mit dem ersten Kopplungsteil in dem Kopplungsabschnitt drehfest gekoppelt. In einer zweckmäßigen Ausgestaltung ist das erste Bremselement gemeinsam mit dem ersten Kopplungsteil um die Antriebsachse in dem Kopplungsgehäuse drehbar gelagert. Vorteilhaft nimmt das erste Bremselement keinen zusätzlichen Bauraum in axialer Richtung der Antriebsvorrichtung ein. Das erste Bremselement wird dabei gemeinsam mit dem ersten Antriebselement, welches ebenfalls drehfest mit dem ersten Kopplungsteil verbunden ist, um die Antriebsachse drehbar angetrieben. Bei Abschaltung des Motors und damit der Beendigung einer angetriebenen Bewegung des ersten Antriebselementes wirkt das erste Bremselement bzw. die Bremsvorrichtung unmittelbar auf die noch vorhandene Restbewegung des ersten Antriebselementes und bewirkt eine schnelle Bremsung einer durch die Trägheit bedingten restlichen Antriebsbewegung der Antriebsvorrichtung. Darüber hinaus bewirkt die Bremsvorrichtung zudem, dass die Fahrzeugklappe in der aktuellen Position verbleibt und sich nicht unbeabsichtigt bewegt.

In einer besonders bevorzugten Ausgestaltung ist vorgesehen, dass das erste Bremselement als Bremsscheibe ausgebildet ist. Vorteilhaft weist das erste Bremselement eine ringförmige Bremsfläche auf, welche besonders vorteilhaft senkrecht zu der Antriebsachse ausgerichtet ist. Hierdurch wird eine besonders effektive Abbremsung des ersten Antriebselementes bzw. des ersten Kopplungsteils erzielt. Weiter vorteilhaft kann das erste Bremselement mit hoher Zuverlässigkeit und kostengünstig in großen Stückzahlen hergestellt werden und kann zudem leicht ersetzt werden.

Besonders bevorzugt ist der Kopplungsabschnitt des ersten Kopplungsteils hohlzylindrisch ausgebildet. Vorteilhaft wird hierdurch die Möglichkeit geschaffen, dass in dem Kopplungsabschnitt gleichzeitig auf einem begrenzten axialen Abschnitt sowohl die Kopplung des ersten Kopplungsteils mit dem ersten Antriebselement als auch die Kopplung des ersten Kopplungsteils mit der Bremsvorrichtung bzw. den Bremselementen, welche gemeinsam mit dem ersten Antriebselement verlagert bzw. gedreht werden sollen, vorgenommen wird.

In einer vorteilhaften Weiterbildung ist in dem Kopplungsabschnitt des ersten Kopplungsteils eine Innenkerbverzahnung zur Kopplung mit dem ersten Antriebselement und eine Außenkerbverzahnung zur Kopplung mit der Bremsvorrichtung vorgesehen. Bevorzugt ist die Innenkerbverzahnung an einem Innenumfang des hohlzylindrischen ersten Kopplungsteils und die Außenkerbverzahnung an einem Außenumfang des hohlzylindrischen ersten Kopplungsteils vorgesehen. Vorteilhaft wird hierdurch ermöglicht, dass das erste Antriebselement mit einem entsprechenden Gegenkopplungsabschnitt mit der Innenkerbverzahnung des ersten Kopplungsteils in Eingriff steht und die Außenkerbverzahnung in Eingriff mit der Bremsvorrichtung bzw. den Bremselementen in Eingriff steht, welche gemeinsam mit dem ersten Kopplungsteils drehbar in dem Kopplungsgehäuse gelagert sein sollen.

In einer besonders bevorzugten Ausgestaltung ist vorgesehen, dass das erste Bremselement einen Innenzahnkranz aufweist, wobei der Innenzahnkranz mit der Außenkerbverzahnung des ersten Kopplungsteils kämmt. Vorteilhaft ist das erste Bremselement hierdurch drehfest mit dem ersten Kopplungsteil verbunden, sodass bei einer angetriebenen Drehbewegung des Kopplungsteils durch den Motor ebenso das erste Bremselement mitgedreht wird. Weiter vorteilhaft ist das erste Bremselement gleichzeitig axial gegenüber dem ersten Kopplungsteil verlagerbar, sodass das erste Bremselement insbesondere durch ein Vorspannmittel in Richtung auf ein zweites Bremselement verlagerbar ist, so dass eine Bremskraft, welche gegen eine unbeabsichtigte Drehbewegung des Kopplungsteils bzw. des mit dem Kopplungsteils drehfest verbundenen ersten Antriebselementes wirkt, eingestellt werden kann.

In einer zweckmäßigen Weiterbildung weist das erste Antriebselement einen Gegenkopplungsabschnitt auf. Vorteilhaft ist der Gegenkopplungsabschnitt mit dem Kopplungsabschnitt des ersten Kopplungsteils gekoppelt. Besonders bevorzugt ist eine Außenrändelung in dem Gegenkopplungsabschnitt des ersten Antriebselementes vorgesehen. Vorteilhaft steht die Außenrändelung des Gegenkopplungsabschnittes des ersten Antriebselementes in Eingriff mit einer Innenkerbverzahnung des Kopplungsabschnittes des ersten Kopplungsteils. Besonders zweckmäßig ist der Gegenkopplungsabschnitt an einem ersten Ende des ersten Antriebselementes angeordnet. Vorteilhaft kann eine drehfeste Verbindung zwischen dem ersten Antriebselement und dem ersten Kopplungsteil durch Einschieben des ersten Endes des ersten Antriebselementes bzw. des Gegenkopplungsabschnittes in den Kopplungsabschnitt des ersten Kopplungsteils hergestellt werden.

Besonders bevorzugt ist das erste Antriebselement als Spindelstange ausgebildet. Vorteilhaft umfasst die Antriebsvorrichtung ein zweites Antriebselement, welches mit dem ersten Antriebselement in Eingriff steht. Bevorzugt ist das zweite Antriebselement als Spindelmutter ausgebildet, sodass durch eine angetriebene Drehung eines von Spindelstange und Spindelmutter eine ausreichend große Antriebskraft in Richtung der Antriebsachse erzeugt werden kann.

In einer vorteilhaften Weiterbildung ist ein Deckelelement an einem offenen Ende des Kopplungsgehäuses angeordnet. Das Deckelelement ist bevorzugt als Anschlagteil für die Bremsvorrichtung ausgebildet, welche einseitig durch das Deckelelement in Richtung der Antriebsachse begrenzt wird. Besonders bevorzugt ist das Deckelelement als Spritzgussteil aus einem laserintransparenten Kunststoff ausgebildet. Zweckmäßigerweise weist das Deckelelement einen geringeren Außendurchmesser als das hohlzylindrische Kopplungsgehäuse auf, sodass das Deckelelement in das offene Ende des Kopplungsgehäuses eingesetzt werden kann und anschließend durch Laserverschweißung fixierbar ist. Alternativ zu einer Laserverschweißung kann jedoch auch vorgesehen sein, dass das Deckelelement durch alternative stoffschlüssige Verbindungen, beispielsweise Kleben, mit dem Kopplungsgehäuse verbunden ist. Weiter alternativ kann auch eine formschlüssige Verbindung zwischen Deckelelement und Kopplungsgehäuse vorgesehen sein.

Besonders bevorzugt ist die Bremsvorrichtung axial zwischen dem Deckelelement und einer Bodenfläche des Kopplungsgehäuses eingespannt. Die Bodenfläche ist bevorzugt rinförmig ausgebildet und wird nach innen radial durch eine zentrale Öffnung in dem Kopplungsgehäuse begrenzt. Zweckmäßigerweise ist das Vorspannmittel, das erste Bremselement und das zweite Bremselement axial zwischen dem Deckelelement und der Bodenfläche des Kopplungsgehäuses eingespannt. Vorteilhaft können die Bestandteile der Bremsvorrichtung in das Kopplungsgehäuse eingesetzt werden, wobei die Bremsvorrichtung in dem Kopplungsabschnitt des ersten Kopplungsteils konzentrisch um die Antriebsachse ausgerichtet wird und die durch die Bremsvorrichtung ausgeübte Bremskraft durch abschließendes Einsetzen des Deckelelementes festgelegt werden kann, da die Vorspannung der Bremselemente untereinander durch die Einspannung zwischen dem Deckelelement und der Bodenfläche des Kopplungsgehäuses erfolgt.

Besonders bevorzugt ist die Kopplungsvorrichtung als Zwischengetriebe ausgebildet. Zweckmäßiger Weise umfasst das Zwischengetriebe mehrere Getriebeteile, welche miteinander in Eingriff stehen, um eine Übersetzung eines durch eine Antriebswelle des Motors erzeugten primären Drehmomentes in ein abtrieb-seitiges Drehmoment zu bewirken. Das erste Kopplungsteil ist dabei als Getrieberad ausgebildet, welches auf der dem ersten Antriebselement zugewandten Seite des Zwischengetriebes angeordnet ist, sodass das abtriebseitigen Drehmoment auf das erste Antriebselement durch Kopplung des ersten Kopplungsteils mit dem ersten Antriebselement übertragen werden kann. Alternativ ist die Kopplungsvorrichtung als Drehmomentbegrenzungsvorrichtung ausgebildet.

Weitere Vorteile, Weiterbildungen und Eigenschaften der Erfindung ergeben sich aus der nachstehenden Beschreibung eines bevorzugten Ausführungsbeispiels sowie aus den abhängigen Ansprüchen.

Die Erfindung wird nachfolgend unter Bezugnahme auf die anliegenden Zeichnungen anhand eines bevorzugten Ausführungsbeispiels der Erfindung näher erläutert.
- Fig. 1: zeigt ein bevorzugtes Ausführungsbeispiel einer erfindungsgemäßen Antriebsvorrichtung in einer Querschnittsansicht.
- Fig. 2: zeigt eine Detailansicht der Antriebsvorrichtung aus Fig. 1 im Bereich der Bremsvorrichtung.

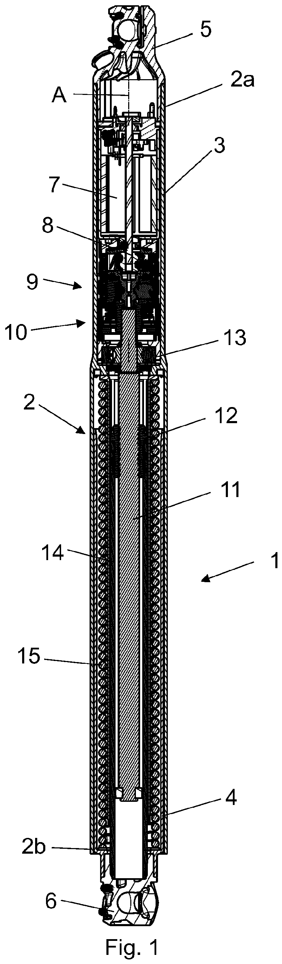

Fig. 1 zeigt ein bevorzugtes Ausführungsbeispiel einer erfindungsgemäßen Antriebsvorrichtung 1 in einer Querschnittsansicht. Die Antriebsvorrichtung 1 umfasst ein teleskopierbares Antriebsgehäuse 2 mit einem ersten Gehäuseteil 3 und einem zweiten Gehäuseteil 4, welche hohlzylinderförmig ausgebildet sind und ineinandergesteckt sind, sodass diese axial entlang einer Antriebsachse A der Antriebsvorrichtung 1 gegeneinander verlagerbar sind und so das Antriebsgehäuse 2 in seiner Länge verstellbar ist. Weiter umfasst die Antriebsvorrichtung 1 ein erstes Anschlusselement 5, welches endseitig an dem ersten Gehäuseteil 3 befestigt ist. Das erste Anschlusselement 5 ist als Kugelpfanne ausgebildet und ist in einem offenen Ende des ersten Gehäuseteils 3 befestigt, sodass das erste Ende 2a des Antriebsgehäuses 2 mit einem von Fahrzeugkarosserie und Fahrzeugklappe gelenkig verbunden werden kann. Weiter umfasst die Antriebsvorrichtung ein dem ersten Anschlusselement 5 gegenüberliegend angeordnetes zweites Anschlusselement 6. Das zweite Anschlusselement 6 ist ebenso als Kugelpfanne ausgebildet und ist in einem offenen Ende des zweiten Gehäuseteils 4 befestigt, sodass ein zweites Ende 2b des Antriebsgehäuses 2 mit dem anderen von Fahrzeugkarosserie und Fahrzeugklappe gelenkig verbunden werden kann.

In dem ersten Gehäuseteil 3 ist ein als Elektromotor ausgebildeter Motor 7 angeordnet, welcher für den Antrieb einer linearen Verstellbewegung des Antriebsgehäuses 2 entlang der Antriebsachse A vorgesehen ist. Eine abstehende Antriebswelle 8 des Motors 7 ist mit einem dem ersten Anschlusselement 5 abgewandten Ende mit einer Kopplungsvorrichtung 9 gekoppelt. In dem hier gezeigten Ausführungsbeispiel ist die Kopplungsvorrichtung 9 als Zwischengetriebe ausgebildet, sodass eine Übersetzung eines Drehmoments der Antriebswelle 8 ermöglicht wird.

Weiter umfasst die Antriebsvorrichtung 1 eine Bremsvorrichtung 10, welche zur Bremsung einer durch die Antriebswelle 8 angetriebenen Verstellbewegung vorgesehen ist. Weiter umfasst die Antriebsvorrichtung 1 ein als Spindelstange ausgebildetes erstes Antriebselement 11 und ein als Spindelmutter ausgebildetes zweites Antriebselement 12, welche miteinander in Gewindeeingriff stehen, sodass eine durch die Antriebswelle 8 angetriebene über die Kopplungsvorrichtung vermittelte Drehbewegung des ersten Antriebselementes 11 in eine lineare Bewegung entlang der Antriebsachse A umgewandelt wird. Die Kopplungsvorrichtung 9 ist zweckmäßig zwischen der Antriebswelle 8 und der Spindelstange 11 angeordnet. Vorteilhaft ist die Spindelstange 11 über die Kopplungsvorrichtung 9 mit der Antriebswelle 8 des Motors 7 gekoppelt, wobei die Spindelstange 11 drehbar in einem als Kugellager ausgebildeten Drehlager 13 angeordnet ist. Das Drehlager 13 selbst ist drehfest in dem ersten Gehäuseteil 3 aufgenommen.

Die Spindelmutter 12 ist drehfest in einem mit dem zweiten Gehäuseteil 4 verbundenen Führungsrohr 14 angeordnet. Radial zwischen dem Führungsrohr 14 und dem zweiten Gehäuseteil 4 ist ein als Schraubendruckfeder ausgebildetes Federteil 15 angeordnet, welches zur Vorspannung des Gehäuses 2 bzw. des ersten Gehäuseteils 3 und des zweiten Gehäuseteils 4 in die ausgefahrene Position vorgesehen ist. Das Federteil 15 ist hierzu axial zwischen dem ersten Gehäuseteil 3 und dem zweiten Gehäuseteil 4 eingespannt, so dass das Federteil 15 eine Kraft parallel zur Antriebsachse A ausübt.

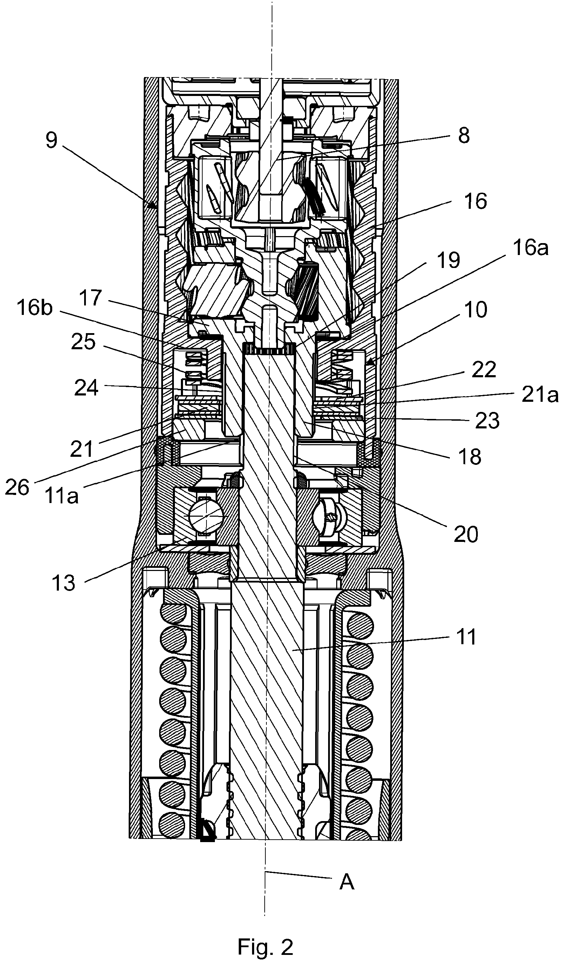

Fig. 2 zeigt eine Detailansicht der Antriebsvorrichtung aus Fig. 1 im Bereich der Bremsvorrichtung 10. In dieser Ansicht ist gut zu erkennen, dass die Kopplungsvorrichtung 9 ein Kopplungsgehäuse 16 und ein erstes Kopplungsteil 17 umfasst, welches der Spindelstange 11 zugewandt angeordnet ist. Das erste Kopplungsteil 17 ist in dem Kopplungsgehäuse 16 drehbar aufgenommen und umfasst einen endseitigen Kopplungsabschnitt 18. Der Kopplungsabschnitt 18 ist in dem hier gezeigten Ausführungsbeispiel als hohlzylindrischer Fortsatz des ersten Kopplungsteils 17 ausgebildet. Der Kopplungsabschnitt 18 durchsetzt eine zentrale innere Bohrung 16a des Kopplungsgehäuses 16, wobei das erste Kopplungsteil 17 hierdurch radial in dem Kopplungsgehäuse 16 geführt wird.

Das erste Kopplungsteil 17 ist in dem Kopplungsabschnitt 18 drehfest mit der Spindelstange 11 über einen Gegenkopplungsabschnitt 11a, welcher endseitig an der Spindelstange 11 vorgesehen ist, gekoppelt. Zur drehfesten Kopplung der Spindelstange 11 mit dem ersten Kopplungsteil 17, weist der Kopplungsabschnitt 18 des ersten Kopplungsteils 17 entlang seines Innendurchmessers eine Innenkerbverzahnung 19 auf, welche mit einer in dem Gegenkopplungsabschnitt 11a der Spindelstange 11 vorgesehenen Außenrändelung 20 in Eingriff steht. Vorteilhaft kann die Spindelstange 11 einfach in den Kopplungsabschnitt 18 des ersten Kopplungsteils 17 eingesteckt werden und so eine zuverlässige drehfeste Kopplung zwischen der Spindelstange 11 und dem ersten Kopplungsteil 17 erzielt werden.

Die Bremsvorrichtung 10 umfasst ein gegenüber dem Kopplungsgehäuse 16 drehbares erstes Bremselement 21, welches drehfest, jedoch axial verlagerbar an dem ersten Kopplungsteil 17 angeordnet ist. Weiter umfasst die Bremsvorrichtung 10 ein gegenüber dem Kopplungsgehäuse 16 drehfestes, jedoch axial verlagerbares zweites Bremselement 22 und ein gegenüber dem Kopplungsgehäuse 16 drehfestes, jedoch axial verlagerbares drittes Bremselement 23. Das erste Bremselement 21, das zweite Bremselement 22 und das dritte Bremselement 23 sind als Bremsscheiben ausgebildet. In dem hier gezeigten Ausführungsbeispiel ist das erste Bremselement 21 axial zwischen dem zweiten Bremselement 22 und dem dritten Bremselement 23 angeordnet.

An einem Außenumfang des Kopplungsabschnittes 18 ist eine Außenkerbverzahnung 24 vorgesehen, welcher zur drehfesten Kopplung des ersten Bremselementes 21 der Bremsanordnung 10 mit dem ersten Kopplungsteil 17 vorgesehen ist. Das als Bremsscheibe ausgebildete erste Bremselement 21 weist ein zu der Außenkerbverzahnung 21 passenden Innenzahnkranz 21a auf, welcher mit der Außenkerbverzahnung 24 des Kopplungsabschnittes 18 in Eingriff steht. Vorteilhaft ist das erste Bremselement 21 hierdurch drehfest, jedoch axial verlagerbar auf dem Kopplungsabschnitt 18 des ersten Kopplungsteils 17 angeordnet.

Das zweite Bremselement 22 und das dritte Bremselement 23 sind drehfest, jedoch axial gegenüber dem Kopplungsgehäuse 16 verlagerbar an dem Kopplungsabschnitt 18 des ersten Kopplungsteils 17 angeordnet. Das erste Bremselement 21 ist zwischen dem zweiten Bremselement 22 und dem dritten Bremselement 23 angeordnet. Die Bremsvorrichtung 10 umfasst weiter ein Vorspannmittel 25, welche die Bremselemente 21, 22, 23 gegeneinander vorspannt und so die Bremskraft auf das erste Kopplungsteil 17 bzw. die Spindelstange 11 bestimmt. Das Vorspannmittel 25 ist als Tellerfeder ausgebildet. Vorteilhaft ist diese sehr kompakt ausgebildet und für die Einstellung der benötigten Vorspannkraft ausreichend zuverlässig.

Das Vorspannmittel 25 ist axial zwischen einem im Bereich der Öffnung 16a angeordneten ringförmigen Boden 16b des Kopplungsgehäuses 16 und den Bremselementen 21, 22, 23 angeordnet. Ein Deckelelement 26 ist an einem dem Drehlager 13 zugewandten offenen Ende des Kopplungsgehäuses 16 angeordnet. Die Bremselemente 21, 22, 23 sind axial zwischen dem Deckelement 26 und dem Vorspannmittel angeordnet. Vorteilhaft fungiert das Deckelement 26 als Anschlagfläche, welche bei der Montage der Antriebsvorrichtung in das offene Ende des Kopplungsgehäuses 16 eingesetzt wird und dabei so weit in das Kopplungsgehäuse 16 eingedrückt wird, bis eine beabsichtigte Vorspannung der Bremselemente 21, 22, 23 unter der Krafteinwirkung des Vorspannmittels 25 erreicht ist.

Das Deckelelement 26 wird radial durch das Kopplungsgehäuse 16 umschlossen. Das Deckelelement 26 besteht aus einem laserintransparenten Kunststoff und das Kopplungsgehäuse 16 besteht aus einem lasertransparenten Kunststoff. Vorteilhaft ist das Deckelelement 26 durch Laserschweißung mit dem Kopplungsgehäuse 16 verbunden. Vorteilhaft kann die Vorspannung des Vorspannmittels 25 und damit die die Bremskraft bestimmende Reibung zwischen den Bremselementes 21, 22, 23 sehr genau durch Einsetzen des Deckelelementes 26 in das offene Ende des Kopplungsgehäuses 16 eingestellt und durch Laserschweißung von außen durch das Kopplungsgehäuse 16 hindurch dauerhaft festgelegt werden.

Der Vorteil bei dem vorstehenden Ausführungsbeispiel einer erfindungsgemäßen Antriebsvorrichtung ist neben der Reduktion der Restbaulänge bzw. der technischen Länge, dass die Spindelstange 11 eine geringere Modulation erfährt, da der Abstand zwischen dem Kopplungsabschnitt 18, in dem die Spindelstange 11 endseitig abgestützt ist und dem Kugellager 13 ebenfalls reduziert wird. Zudem können die Gesamttoleranzen der Kopplungsvorrichtung und der Bremsvorrichtung gemeinsam eingestellt werden, sodass sich die Toleranzen insgesamt reduzieren.

Vorstehend wurde die Erfindung anhand eines Ausführungsbeispiels erläutert, bei dem die Bremsvorrichtung 10 als Lamellenbremse mit drei Bremsscheiben ausgebildet ist, wobei die Vorspannung mechanisch über eine Tellerfeder 25 erfolgt. Es versteht sich, dass die Bremsvorrichtung auch als elektromechanische Bremse ausgebildet sein kann. In jedem Fall ist die Bremsvorrichtung axial vollständig in dem Kopplungsabschnitt der Kopplungsvorrichtung zur Kopplung mit dem ersten Antriebselement angeordnet, so dass in Richtung der Antriebsachse kein zusätzlicher Bauraum für die Bremsvorrichtung benötigt wird und die Restbaulänge so gering wie möglich ist.

## Patentansprüche

1. Antriebsvorrichtung, insbesondere für eine verstellbare Fahrzeugklappe, umfassend
ein Gehäuse (2), wobei sich das Gehäuse (2) axial entlang einer Antriebsachse (A) erstreckt,
einen Motor (7) zur Erzeugung einer Antriebskraft in Richtung der Antriebsachse (A),
ein erstes Antriebselement (11),
eine zwischen dem Motor und dem ersten Antriebselement (11) angeordnete Kopplungsvorrichtung (9), wobei die Kopplungsvorrichtung (9) ein Kopplungsgehäuse (16) und zumindest ein erstes Kopplungsteil (17) mit einem Kopplungsabschnitt (18) zur Kopplung mit dem ersten Antriebselement (11) umfasst, wobei das erste Antriebselement (11) über den Kopplungsabschnitt (18) des ersten Kopplungsteils (17) mit der Kopplungsvorrichtung (9) gekoppelt ist, und
eine Bremsvorrichtung (10) zur Bremsung einer Antriebsbewegung des ersten Antriebselementes (11),
**dadurch gekennzeichnet,**
**dass** die Bremsvorrichtung (10) axial vollständig in dem Kopplungsabschnitt (18) des ersten Kopplungsteils (17) angeordnet ist.

2. Antriebsvorrichtung nach Anspruch 1, **dadurch gekennzeichnet, dass** die Bremsvorrichtung (10) den Kopplungsabschnitt (18) radial umgibt.

3. Antriebsvorrichtung nach Anspruch 1 oder 2, **dadurch gekennzeichnet, dass** die Bremsvorrichtung (10) ein erstes Bremselement (21) umfasst, wobei das erste Bremselement (21) in dem Kopplungsgehäuse (16) um die Antriebsachse (A) drehbar gelagert ist.

4. Antriebsvorrichtung nach Anspruch 3, **dadurch gekennzeichnet, dass** die Bremsvorrichtung (10) ein zweites Bremselement (22) umfasst, wobei das zweite Bremselement (22) in dem Kopplungsgehäuse (16) drehfest angeordnet ist und kraftschlüssig mit dem ersten Bremselement (21) zur Erzeugung einer Bremskraft gekoppelt ist.

5. Antriebsvorrichtung nach Anspruch 4, **dadurch gekennzeichnet, dass** die Bremsvorrichtung (10) ein Vorspannmittel (25) umfasst, welche das erste Bremselement (21) und das zweite Bremselement (22) axial gegeneinander vorspannt.

6. Antriebsvorrichtung nach Anspruch 5, **dadurch gekennzeichnet, dass** das Vorspannmittel (25) als Tellerfeder ausgebildet ist.

7. Antriebsvorrichtung nach einem der Ansprüche 3 bis 6, **dadurch gekennzeichnet, dass** das erste Bremselement (21) in dem Kopplungsabschnitt (18) drehfest mit dem ersten Kopplungsteil (17) gekoppelt ist.

8. Antriebsvorrichtung nach Anspruch 7, **dadurch gekennzeichnet, dass** das erste Bremselement (21) gemeinsam mit dem ersten Kopplungsteil (17) um die Antriebsachse (A) in dem Kopplungsgehäuse (16) drehbar gelagert ist.

9. Antriebsvorrichtung nach einem der Ansprüche 3 bis 8, **dadurch gekennzeichnet, dass** das erste Bremselement (21) als Bremsscheibe ausgebildet ist.

10. Antriebsvorrichtung nach einem der Ansprüche 3 bis 9, **dadurch gekennzeichnet, dass** der Kopplungsabschnitt (18) des ersten Kopplungsteils (17) hohlzylindrisch ausgebildet ist.

11. Antriebsvorrichtung nach Anspruch 10, **dadurch gekennzeichnet, dass** in dem Kopplungsabschnitt (18) des ersten Kopplungsteils (17) eine Innenkerbverzahnung (19) zur Kopplung mit dem ersten Antriebselement (11) und eine Außenkerbverzahnung (24) zur Kopplung mit der Bremsvorrichtung (10), bevorzugt mit dem ersten Bremselement (21) vorgesehen ist.

12. Antriebsvorrichtung nach Anspruch 11, **dadurch gekennzeichnet, dass** die Innenkerbverzahnung (19) an einem Innenumfang des ersten hohlzylindrischen Kopplungsteils (17) und die Außenkerbverzahnung (24) an einem Außenumfang des ersten hohlzylindrischen Kopplungsteils (17) vorgesehen ist.

13. Antriebsvorrichtung nach einem der der Ansprüche 11 oder 12, **dadurch gekennzeichnet, dass** das erste Bremselement (21) einen Innenzahnkranz (21a) aufweist, wobei der Innenzahnkranz (21a) mit der Außenkerbverzahnung (24) des ersten Kopplungsteils (17) kämmt.

14. Antriebsvorrichtung nach einem der vorhergehenden Ansprüche,
**dadurch gekennzeichnet, dass** das erste Antriebselement (11) einen mit dem Kopplungsabschnitt (18) des ersten Kopplungsteils (17) gekoppelten Gegenkopplungsabschnitt (11a) aufweist.

15. Antriebsvorrichtung nach Anspruch 14, **dadurch gekennzeichnet, dass** der Gegenkopplungsabschnitt (11a) an einem ersten Ende des ersten Antriebselementes (11) angeordnet ist.

## Claims

1. Drive device, in particular for an adjustable vehicle flap, comprising
a housing (2), wherein the housing (2) extends axially along a drive axle (A),
a motor (7) for generating a driving force in the direction of the drive axle (A),
a first drive element (11),
a coupling device (9) arranged between the motor and the first drive element (11), wherein the coupling device (9) comprises a coupling housing (16) and at least one first coupling part (17) with a coupling section (18) for coupling to the first drive element (11), wherein the first drive element (11) is coupled to the coupling device (9) via the coupling section (18) of the first coupling part (17), and
a braking device (10) for braking a drive movement of the first drive element (11),
**characterized in that**
the braking device (10) is arranged axially completely in the coupling section (18) of the first coupling part (17).

2. Drive device according to claim 1, **characterized in that** the braking device (10) radially surrounds the coupling section (18).

3. Drive device according to claim 1 or 2, **characterized in that** the braking device (10) comprises a first brake element (21), wherein the first brake element (21) is mounted in the coupling housing (16) rotatably about the drive axle (A).

4. Drive device according to claim 3, **characterized in that** the braking device (10) comprises a second brake element (22), wherein the second brake element (22) is arranged in a rotationally-fixed manner in the coupling housing (16) and is coupled in a force-locking manner to the first brake element (21) for generating a braking force.

5. Drive device according to claim 4, **characterized in that** the braking device (10) comprises a biasing means (25), which biases the first brake element (21) and the second brake element (22) axially against one another.

6. Drive device according to claim 4, **characterized in that** the biasing means (25) is designed as a disk spring.

7. Drive device according to one of claims 3 to 6, **characterized in that** the first brake element (21) in the coupling section (18) is coupled in a rotationally-fixed manner to the first coupling part (17).

8. Drive device according to claim 7, **characterized in that** the first brake element (21) is mounted together with the first coupling part (17) rotatably about the drive axle (A) in the coupling housing (16).

9. Drive device according to one of claims 3 to 8, **characterized in that** the first brake element (21) is designed as a brake disk.

10. Drive device according to one of claims 2 to 8, **characterized in that** the coupling section (18) of the first coupling part (17) is designed to be hollow-cylindrical.

11. Drive device according to claim 10, **characterized in that**, in the coupling section (18) of the first coupling part (17), an inner spline (19) is provided for coupling to the first drive element (11), and an outer spline (24) is provided for coupling to the braking device (10), preferably to the first brake element (21).

12. Drive device according to claim 11, **characterized in that** the inner spline (19) is provided on an inner circumference of the hollow-cylindrical first coupling part (17), and the outer spline (24) is provided on an outer circumference of the hollow-cylindrical first coupling part (17).

13. Drive device according to one of claims 11 or 12, **characterized in that** the first brake element (21) has an internal toothed ring (21a), wherein the internal toothed ring (21a) meshes with the outer spline (24) of the first coupling part (17).

14. Drive device according to one of the preceding claims, charcterized in that the first drive element (11) has a counter coupling section (11a) coupled to the coupling section (18) of the first coupling part (17).

15. Drive device according to claim 14, **characterized in that** the counter coupling section (11a) is arranged at a first end of the first drive element (11).

## Revendications

1. Dispositif d'entraînement, en particulier pour un élément de type clapet de véhicule réglable, comprenant
un boîtier (2), dans lequel le boîtier (2) s'étend axialement le long d'un axe d'entraînement (A),
un moteur (7) pour la génération d'une force d'entraînement en direction de l'axe d'entraînement (A),
un premier élément d'entraînement (11),
un dispositif d'accouplement (9) disposé entre le moteur et le premier élément d'entraînement (11), dans lequel le dispositif d'accouplement (9) comprend un boîtier d'accouplement (16) et au moins une première partie d'accouplement (17) comportant une section d'accouplement (18) pour l'accouplement au premier élément d'entraînement (11), dans lequel le premier élément d'entraînement (11) est accouplé au dispositif d'accouplement (9) par l'intermédiaire de la section d'accouplement (18) de la première partie d'accouplement (17), et
un dispositif de freinage (10) permettant de freiner un mouvement d'entraînement du premier élément d'entraînement (11),
**caractérisé en ce**
**que** le dispositif de freinage (10) est disposé axialement entièrement dans la section d'accouplement (18) de la première partie d'accouplement (17).

2. Dispositif d'entraînement selon la revendication 1, **caractérisé en ce que** le dispositif de freinage (10) entoure radialement la section d'accouplement (18).

3. Dispositif d'entraînement selon la revendication 1 ou 2, **caractérisé en ce que** le dispositif de freinage (10) comprend un premier élément de freinage (21), dans lequel le premier élément de freinage (21) est monté de manière à pouvoir pivoter autour de l'axe d'entraînement (A) dans le boîtier d'accouplement (16).

4. Dispositif d'entraînement selon la revendication 3, **caractérisé en ce que** le dispositif de freinage (10) comprend un deuxième élément de freinage (22), dans lequel le deuxième élément de freinage (22) est disposé de manière solidaire en rotation dans le boîtier d'accouplement (16) et est accouplé à force au premier élément de freinage (21) pour la génération d'une force de freinage.

5. Dispositif d'entraînement selon la revendication 4, **caractérisé en ce que** le dispositif de freinage (10) comprend un moyen de précontrainte (25) qui précontraint le premier élément de freinage (21) et le second élément de freinage (22) axialement l'un contre l'autre.

6. Dispositif d'entraînement selon la revendication 5, **caractérisé en ce que** le moyen de précontrainte (25) est réalisé sous la forme d'une rondelle ressort.

7. Dispositif d'entraînement selon l'une des revendications 3 à 6, **caractérisé en ce que** le premier élément de freinage (21) est accouplé de manière solidaire en rotation à la première partie d'accouplement (17) dans la section d'accouplement (18).

8. Dispositif d'entraînement selon la revendication 7, **caractérisé en ce que** le premier élément de freinage (21) est monté dans le boîtier d'accouplement (16) de manière à pouvoir pivoter autour de l'axe d'entraînement (A) conjointement avec la première partie d'accouplement (17).

9. Dispositif d'entraînement selon l'une des revendications 3 à 8, **caractérisé en ce que** le premier élément de freinage (21) est réalisé sous la forme d'un disque de frein.

10. Dispositif d'entraînement selon l'une des revendications 3 à 9, **caractérisé en ce que** la section d'accouplement (18) de la première partie d'accouplement (17) est réalisée sous forme de cylindre creux.

11. Dispositif d'entraînement selon la revendication 10, **caractérisé en ce que**, dans la section d'accouplement (18) de la première partie d'accouplement (17), une denture à cannelures intérieure (19) est prévue pour l'accouplement au premier élément d'entraînement (11) et une denture à cannelures extérieure (24) est prévue pour l'accouplement au dispositif de freinage (10), de préférence au premier élément de freinage (21).

12. Dispositif d'entraînement selon la revendication 11, **caractérisé en ce que** la denture à cannelures intérieure (19) est prévue sur une périphérie intérieure de la première partie d'accouplement (17) cylindrique creuse et la denture à cannelures extérieure (24) est prévue sur une périphérie extérieure de la première partie d'accouplement (17) cylindrique creuse.

13. Dispositif d'entraînement selon l'une des des revendications 11 ou 12, **caractérisé en ce que** le premier élément de freinage (21) présente une couronne dentée intérieure (21a), dans lequel la couronne dentée intérieure (21a) s'engrène avec la denture à cannelures extérieure (24) de la première partie d'accouplement (17).

14. Dispositif d'entraînement selon l'une des revendications précédentes, **caractérisé en ce que** le premier élément d'entraînement (11) présente une contre-section d'accouplement (11a) accouplée à la section d'accouplement (18) de la première partie d'accouplement (17).

15. Dispositif d'entraînement selon la revendication 14, **caractérisé en ce que** la contre-section d'accouplement (11a) est disposée au niveau d'une première extrémité du premier élément d'entraînement (11).
